(19) Europäisches Patentamt / European Patent Office / Office européen des brevets

(11) **EP 3 273 309 B1**

(12) **FASCICULE DE BREVET EUROPEEN**

(45) Date de publication et mention de la délivrance du brevet:
**07.11.2018 Bulletin 2018/45**

(51) Int Cl.:
**G04B 17/10** (2006.01)     **G04B 31/00** (2006.01)

(21) Numéro de dépôt: **16180484.4**

(22) Date de dépôt: **21.07.2016**

(54) **OSCILLATEUR HYBRIDE D'HORLOGERIE**

HYBRIDOSZILLATOR EINER UHR

TIMEPIECE WITH HYBRID OSCILLATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**24.01.2018 Bulletin 2018/04**

(73) Titulaire: **MONTRES BREGUET S.A.**
**1344 L'Abbaye (CH)**

(72) Inventeurs:
• **LÉGERET, Benoît**
**CH-1024 Ecublens (CH)**
• **LENOIR, Deirdré**
**1347 Le Sentier (CH)**
• **SARCHI, Davide**
**CH-8008 Zürich (CH)**

(74) Mandataire: **Giraud, Eric et al**
**ICB**
**Ingénieurs Conseils en Brevets SA**
**Faubourg de l'Hôpital 3**
**2001 Neuchâtel (CH)**

(56) Documents cités:
**EP-A1- 2 703 911     CH-A2- 704 068**

## Description

### Domaine de l'invention

L'invention concerne un oscillateur d'horlogerie, comportant au moins un ensemble balancier-spiral comportant un mobile balancier comportant lui-même au moins une serge de balancier et rappelé par au moins un spiral.

L'invention concerne encore un mouvement comportant un tel oscillateur.

L'invention concerne encore une montre comportant un tel oscillateur.

L'invention concerne le domaine des oscillateurs mécaniques d'horlogerie.

### Arrière-plan de l'invention

L'oscillateur traditionnel d'une montre bracelet mécanique est le balancier-spiral. Ce type de solution présente plusieurs avantages :

- une chronométrie très précise grâce à la longueur active du spiral, et sa rigidité élevée selon tous les degrés de liberté sauf un (la rotation de la virole autour du centre virtuel) et la facilité de réglage de l'équilibre du balancier (toute l'inertie est concentré dans ce composant) ;
- la stabilité face aux perturbations externes due à la relativement grande inertie du balancier ;
- la possibilité d'entretenir le système par plusieurs systèmes d'échappement ;
- la possibilité de compenser relativement bien les variations thermiques ;
- un facteur de qualité relativement élevé, même pour des fréquences très faibles (de 2 à 10 Hz), et donc une consommation énergétique faible, et une réserve de marche importante ;
- la possibilité de marche avec de grandes amplitudes.

Toutefois, elle présente aussi des criticités :

- le pivotement, les frottements, et les jeux de l'axe du balancier produisent des différences de chronométrie entre les différentes positions de la montre ;
- le pivotement pendant la rotation rend le facteur de qualité et la chronométrie dépendantes de la tribologie des composants, ce qui produit aussi un risque de dérive dans le temps des amplitudes et des marches ;
- la nécessité d'une lubrification parfaite pour optimiser le pivotement, ce qui introduit un paramètre peu maîtrisable, et pouvant évoluer dans le temps ou avec les différences de température et d'hygrométrie ;
- la difficulté d'entretien quand la fréquence d'oscillation devient élevée, à partir de 10 Hz, ce qui pénalise la réserve de marche de ces oscillateurs à haute performance.

### Résumé de l'invention

En 2012 la Société MONTRES BREGUET a introduit une solution innovante permettant de pallier à une partie de ces criticités : le pivotement magnétique. Cette solution a permis d'annuler les différences chronométriques entre les positions de la montre et a conduit à une ultérieure amélioration du facteur de qualité et donc de la réserve de marche.

Toutefois, même si les effets tribologiques sont réduits par cette innovation, ils sont encore présents et la chronométrie est encore partiellement dépendante de la qualité de la tribologie.

Une deuxième solution aux criticités du balancier-spiral a été proposée par la Société BLANCPAIN dans le brevet EP2703911 : un oscillateur avec fil de torsion à la place de l'axe du balancier et du spiral. Cette innovation permet l'élimination des problèmes liées à la tribologie, mais pose des problèmes de principe concernant la qualité chronométrique d'un fil par rapport à un spiral : un fil est assujetti à plusieurs modes de déformations, modes de flexion, précessions, et la suppression de ces modes nécessite l'introduction d'une tension mécanique appliquée aux encastrements qui est difficilement maîtrisable et peut évoluer dans le temps ou avec la variation de la température.

Le but de la présente invention est de retenir les avantages du pivotement magnétique et ceux de l'oscillateur de torsion en éliminant les aspects critiques des deux innovations, en proposant un système hybride mécanique-magnétique, utilisant encore le système balancier-spiral comme organe oscillateur définissant la marche de la montre.

A cet effet, l'invention concerne un oscillateur d'horlogerie selon la revendication 1.

L'invention concerne encore un mouvement comportant au moins un tel oscillateur.

L'invention concerne encore une montre comportant au moins un tel oscillateur.

### Description sommaire des dessins

D'autres caractéristiques et avantages de l'invention apparaîtront à la lecture de la description détaillée qui va suivre, en référence aux dessins annexés, où :

- la figure 1 représente, de façon schématisée, et en perspective tronquée par un plan passant par l'axe de pivotement du balancier, une première variante d'oscillateur hybride selon l'invention, comportant un ensemble balancier-spiral, dont le balancier est aussi rappelé par un fil de torsion, celui-ci étant rigidement fixé à une première extrémité inférieure à une platine, et libre à une extrémité supérieure où il porte une masse qui coopère en attraction magnétique avec un aimant fixé au pont pour assurer la tension du fil, et le maintien du balancier sur son axe théorique ;

- la figure 2 est une vue en coupe, selon le même plan, de l'oscillateur de la figure 1 ;
- la figure 3 est une vue en plan qui montre la fixation du fil à la virole ;
- la figure 4 est une vue en plan qui montre la fixation du fil à la serge ;
- la figure 5 est une vue en plan qui montre la fixation du fil au petit plateau ;
- la figure 6 est un schéma en vue de côté, montrant une masse polaire axiale qui tend à attirer le mobile balancier, tandis que des masses polaires latérales tendent à le repousser, pour bien le maintenir sur son axe ;
- la figure 7 est un schéma en vue de dessus montrant un fil de torsion sous forme d'un faisceau regroupant une pluralité de fils élémentaires régulièrement répartis autour de l'axe ;
- la figure 8 représente, de façon similaire à la figure 2, une deuxième variante d'oscillateur hybride selon l'invention, où la masse coopère en répulsion magnétique avec un aimant fixé au pont pour assurer la tension du fil, et le maintien du balancier sur son axe théorique ;
- la figure 9 est un schéma-bocs représentant une montre comportant un mouvement avec un tel oscillateur.

Description détaillée des modes de réalisation préférés

Le but de l'invention est de cumuler les avantages d'un pivotement magnétique et d'un oscillateur de torsion, en éliminant les aspects critiques de ces deux innovations, en proposant un système hybride mécanique-magnétique, utilisant encore le système balancier-spiral comme organe oscillateur définissant la marche de la montre.

L'invention concerne ainsi un oscillateur 100 d'horlogerie, comportant au moins un ensemble balancier-spiral 10, lequel comporte classiquement un mobile balancier 1 comportant lui-même au moins une serge de balancier 2 et qui est rappelé par au moins un spiral 3.

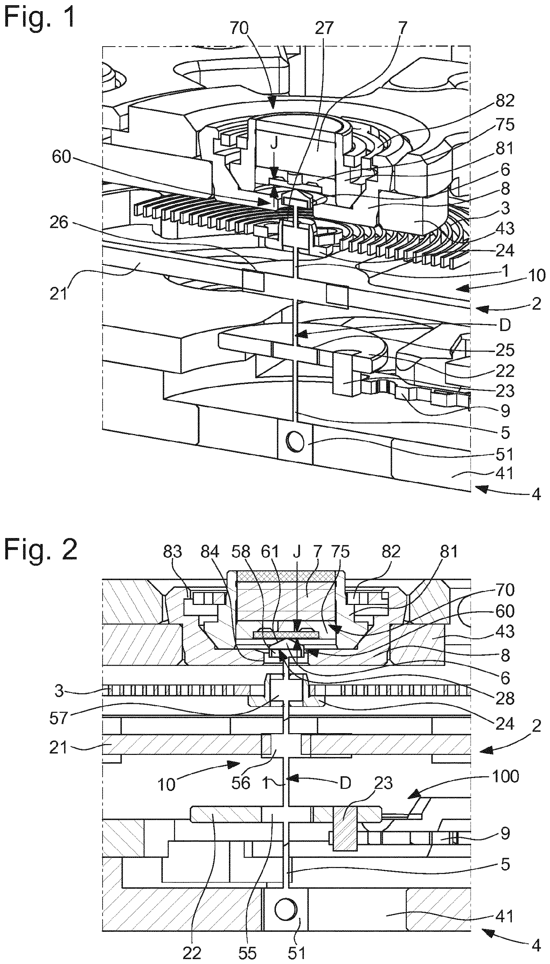

Selon l'invention, le mobile balancier 1 est pivoté par rapport à une structure 4, d'un premier côté par au moins un fil de torsion 5, qui est fixé à une première extrémité par un ancrage 51 rigide ou au travers d'un pare-chute à la structure 4, et d'un deuxième côté opposé au premier côté par un pivot magnétique sans contact. Les figures 1 et 2 illustrent le cas d'un ancrage 51 rigide. Dans une variante non illustrée, cette première extrémité est fixée à un pare-chute lui-même fixé à la structure 4, et a de ce fait un degré de liberté axial, qui est limité par la raideur de ce pare-chute.

Ce pivot magnétique sans contact est agencé pour exercer sur une deuxième extrémité distale du fil de torsion 5, opposée à la première extrémité encastrée au niveau de l'ancrage 51, un effort magnétique de tension selon une direction qui est de préférence celle de l'axe D de l'ensemble balancier-spiral 10. A cet effet, le mobile balancier 1 comportant au moins un premier pôle 60, qui est embarqué avec le mobile balancier 1 et le au moins un fil de torsion 5. Chaque au moins un premier pôle 60 a une symétrie par rapport à un plan passant par l'axe D, ou encore, plus particulièrement, une symétrie par rapport à cet axe D. Cet au moins un premier pôle 60 coopère, pour sa suspension magnétique, et pour la mise en tension du au moins un fil de torsion 5, avec au moins un deuxième pôle 70, 71, 72, que comporte la structure 4, notamment un pont de balancier 43 sur les figures, dans un champ magnétique résultant à symétrie axiale, d'axe D. Cet effort magnétique à résultante axiale permet donc le recentrage radial du pôle embarqué 60, le réalignement axial du fil de torsion 5, et le centrage radial du mobile balancier 1.

En effet, à part le spiral 3, le deuxième pôle 70, 71, 72, agit sur l'ensemble balancier-spiral 10, notamment sur le au moins un premier pôle 60, pour le recentrer selon la direction de l'axe D. Le recentrage du mobile balancier 1 n'est donc pas seulement une conséquence du recentrage axial du fil de torsion 5.

Le champ magnétique résultant à symétrie axiale exerce ainsi, à la fois un effort magnétique de mise en tension axiale du au moins un fil de torsion 5, pour un maintien axial du fil de torsion 5, et un effort magnétique de centrage radial du mobile balancier 1.

Par convention, on qualifie ci-après de « premier » ce qui est lié au fil de torsion 5 et au mobile balancier 1, et de « deuxième » ce qui est lié à la structure 4, du côté de l'extrémité distale du fil de torsion 5.

On comprend que l'interaction est une interaction magnétique entre un premier pôle 60 et un deuxième pôle 70, 71, 72 :

- ou bien en attraction, ce qui autorise la coopération entre un premier aimant et un deuxième aimant en attraction, ou entre un premier aimant et une deuxième partie magnétisée, ou une première partie magnétisée et un deuxième aimant,
- ou bien en répulsion, ce qui est uniquement réalisable avec un premier aimant permanent et un deuxième aimant permanent, ou un premier aimant et un deuxième composant diamagnétique, ou un premier composant diamagnétique et un deuxième aimant.

Selon la configuration choisie, un pôle peut donc être constitué d'un aimant permanent, ou d'un composant diamagnétique, ou d'une partie ferromagnétique. La formulation « masse polaire » utilisée ci-après ne concerne pas exclusivement des aimants permanents, même si c'est une réalisation préférentielle.

L'invention est réalisable dans plusieurs variantes, parmi lesquelles une variante comportant au moins un aimant permanent sur le balancier est particulièrement intéressante, mais non limitative.

L'interaction magnétique est dimensionnée de façon à ce que les champs en présence soient suffisant pour exercer sur l'extrémité distale du fil de torsion 5 un effort suffisant pour bien le tendre, dans toutes les positions dans l'espace, et en résistant aux accélérations usuelles.

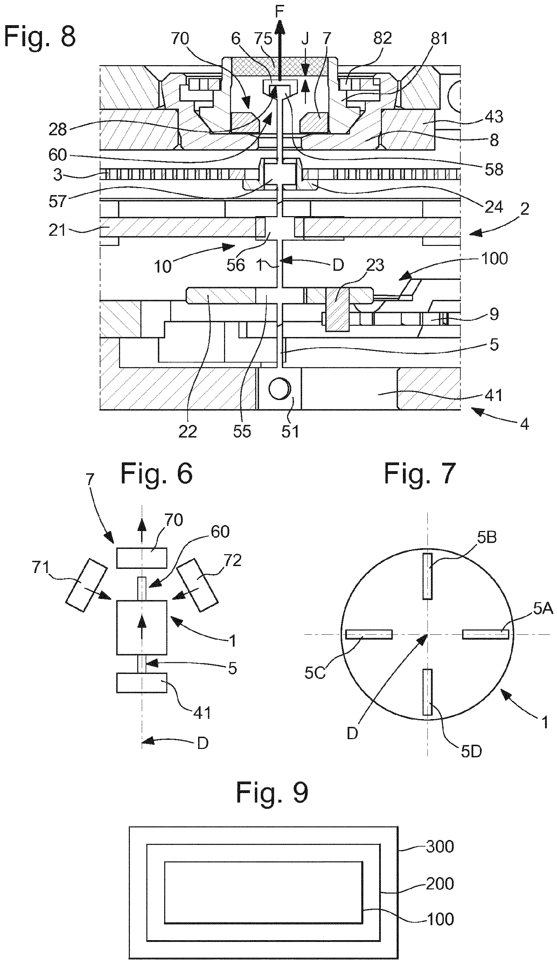

Naturellement, si cet effort de tension F est nécessairement orienté selon la direction axiale D de l'ensemble balancier-spiral 10, il peut être la résultante de champs axiaux, radiaux, ou encore obliques, tel que visible par exemple sur la figure 6.

Dans une mise en oeuvre particulière, le fil de torsion 5 est un fil travaillant en torsion pure, tel que décrit dans la demande de brevet CH 01571/12 au nom de BLANCPAIN SA.

Dans une variante, le au moins un fil de torsion 5 est un réseau avec une pluralité de fils élémentaires formant ensemble un fil de torsion. Chacun de ces fils élémentaires peut être, ou bien un tel fil travaillant en torsion pure, ou bien un fil travaillant en mode flexion, ou, plus précisément, dans un mode combiné de torsion et de flexion. Si la constitution du fil de torsion 5 peut prendre des formes très différentes, l'essentiel est qu'on puisse assurer la tension du fil de torsion, selon la direction axiale D.

Plus particulièrement, au moins un premier pôle 60 a une symétrie de révolution par rapport à l'axe D de l'ensemble balancier-spiral 10. Plus particulièrement encore, chaque premier pôle 60 a une symétrie de révolution par rapport à l'axe D.

Dans une première variante illustrée aux figures 1 et 2, au moins un premier pôle 60 coopère en attraction magnétique avec au moins un deuxième pôle 70. Et, plus particulièrement, chaque premier pôle 60 coopère en attraction magnétique avec au moins un deuxième pôle 70.

Dans une deuxième variante illustrée à la figure 8, au moins un premier pôle 60 coopère en répulsion magnétique avec au moins un deuxième pôle 70. La combinaison d'au moins une liaison de préférence axiale en tension du fil et de liaison obliques ou radiales, de préférence en symétrie de révolution, en répulsion, est possible. La figure 8 montre une réalisation non limitative où un premier pôle 60 d'extrémité du fil, comportant une masse mobile 6, est au-delà des masses polaires, pour avoir une répulsion dans le sens permettant de tendre le fil. Cette variante est intéressante en termes d'épaisseur globale du mouvement. Plus particulièrement, chaque premier pôle 60 coopère en répulsion magnétique avec au moins un deuxième pôle 70.

Plus particulièrement, au moins un premier pôle 60 est une masse mobile 6, notamment un aimant permanent, indépendante du mobile balancier 1 et à distance de celui-ci.

Plus particulièrement, au moins un deuxième pôle 70 est une masse polaire 7. Plus particulièrement cette masse polaire 7 est à symétrie de révolution autour de l'axe D et indépendante de toute source d'énergie externe..

Les figures montrent, au voisinage de cette masse polaire 7, une entretoise amagnétique 75, disposée en limitation de la course du premier pôle 60.

Selon l'invention, ce mobile balancier 1 est pivoté par rapport à une structure 4, d'un premier côté par au moins un fil de torsion 5, et d'un deuxième côté opposé au premier côté par un pivot magnétique sans contact. Pour réaliser ce pivot sans contact, le mobile balancier 1 comporte au moins une masse mobile 6, ayant une symétrie par rapport à l'axe D, ou plus particulièrement une symétrie de révolution par rapport à l'axe D. Plus particulièrement, au moins une telle masse mobile 6 coopère pour sa suspension magnétique avec au moins une masse polaire 7 que comporte la structure 4, tel que visible en attraction sur les figures 1 et 2, ou en répulsion sur la figure 8.

La figure 6 illustre une variante particulière, où une masse polaire axiale 70 tend à attirer le mobile balancier 1, tandis que des masses polaires latérales tendent à le repousser, pour bien le maintenir sur son axe. La configuration inverse est aussi possible.

Dans une variante illustrée à la figure 7, le au moins un fil de torsion 5 est un faisceau 50 regroupant une pluralité de fils de torsion 5 régulièrement répartis autour de l'axe D, et chacun supporté par un plan passant par l'axe D, ou par un plan parallèle à un plan passant par l'axe D, ou par une hélice se développant autour de l'axe D, par exemple si ces fils sont tressés ensemble.

La fabrication d'un fil tressé à l'échelle horlogère est réalisable, et plus spécifiquement en utilisant le silicium, le nitrure ou carbure de silicium, le NiP (nickel-phosphore) ou des verres métalliques : De tels fils tressés existent comme guides de lumière, et la dimension de la section des fils est de l'ordre de la section demandée pour une application de type oscillateur.

Dans la variante illustrée aux figures 1 à 6, et 8, le au moins un fil de torsion 5 est un fil de torsion unique 5 s'étendant au moins le long de l'axe D, c'est-à-dire comportant au moins une partie principale longiligne, rectiligne selon l'axe D, qui est la seule à travailler en torsion, et, selon le cas, comportant une ou plusieurs ailes s'étendant radialement, appelées ci-après des portées, 55, 56, 57, 58, qui sont moins fragiles que la zone rectiligne du fil soumise au couple de torsion, et qui sont agencées pour permettre la fixation de différents composants, que comporte le mobile balancier 1, directement sur le fil de torsion 5 sans endommager ce dernier.

Ainsi, dans une variante particulière, le au moins un fil de torsion 5 comporte une partie longiligne s'étendant sensiblement selon la direction de l'axe D, et au moins une portée d'extension radiale 55, 56, 57, 58 pour sa fixation à un plateau 22 que comporte le mobile balancier 1, et/ou à une partie axiale 21 que comporte la serge de balancier 2, et/ou à une virole 24 que comporte le mobile balancier 1 pour la fixation d'un spiral 3, et/ou à la masse mobile 6.

Plus particulièrement, chaque portée 55, 56, 57, 58, est sensiblement plate, et est agencée pour son insertion dans une fente 25, 26, 27, 28, que comporte la serge de balancier 2, et/ou à une virole 24 que comporte le mobile balancier 1 pour la fixation d'un spiral 3, et/ou à la masse mobile 6.

Dans une variante particulière non illustrée, le au moins un fil de torsion 5 est un fil de torsion unique 5 s'étendant au moins le long de l'axe D, et comportant une portée radiale unique regroupant toutes les portées 55, 56, 57, 58.

Dans une variante particulière non illustrée, le au moins un fil de torsion 5 est un fil de torsion unique 5 s'étendant au moins le long de l'axe D, et comportant une première paire de portées, parmi les portées d'extension radiale 55, 56, 57, 58, regroupant deux portées 55, 56, pour sa fixation au plateau 22 et à la partie axiale 21 de la serge de balancier 2, et une deuxième paire de portées regroupant deux portées 57, 58, pour sa fixation à la virole 24 et à la masse mobile 6.

Dans une variante particulière non illustrée, le au moins un fil de torsion 5 est un fil de torsion unique 5 s'étendant au moins le long de l'axe D, et comportant une première portée unique parmi les portées d'extension radiale 55, 56, 57, 58, et une paire de portées ou une triplette de portées parmi les autres portées d'extension radiale 55, 56, 57, 58, différentes de cette première portée.

Dans une autre variante particulière non illustrée, le au moins un fil de torsion 5 est un fil de torsion unique 5 s'étendant au moins le long de l'axe D, et comportant une première paire de portées parmi les portées d'extension radiale 55, 56, 57, 58, et deux portées distinctes parmi les autres portées d'extension radiale 55, 56, 57, 58, différentes de cette première paire de portées.

Dans la variante particulière illustrée par les figures, le au moins un fil de torsion 5 comporte un ancrage d'extrémité 51 pour sa fixation encastrée dans une platine 41 que comporte la structure 4, et s'étend sensiblement perpendiculairement en porte-à-faux par rapport à cette platine 41.

L'invention constitue donc un oscillateur hybride, puisqu'il comporte deux moyens de rappel différents : le spiral 3 (ou les spiraux 3), et le fil de torsion 5 (ou les fils de torsion 5), dont les influences sont combinées.

La fréquence d'un tel oscillateur hybride est donnée par une combinaison de la rigidité *kspiral* du spiral 3 et de la rigidité *kfil* du fil 5 sous torsion, par la relation :

$$ f = \sqrt{[(k_{spiral} + k_{fil})/J]}/(2\pi) $$

L'invention est intéressante quand la rigidité du fil 5 est beaucoup plus faible que la rigidité du spiral 3, notamment quand $k_{fil} \leq k_{spiral}/10$, parce que, dans ce cas les imprécisions de fabrication ou de positionnement du fil peuvent produire des défauts de marche limités à une valeur de l'ordre de 1 à 10 secondes par jour, défauts qui peuvent être facilement corrigés par des systèmes de réglage habituels du balancier-spiral, tels qu'ablation de matière de la serge, vis de réglage, lame élastique, cliquet excentré, ou autre.

La dénomination de fil « de torsion » fait référence à la contribution de la rigidité du fil, mais en pratique on recherche la moindre rigidité, comparée à la rigidité du spiral.

La figure 7 illustre une variante intéressante comportant un fil dit « composé », où plusieurs fils élémentaires, notamment sous forme de lames 5A, 5B, 5C, 5D, notamment et non limitativement de section rectangulaire, et plus particulièrement mais non limitativement fixées légèrement décentrées par rapport à l'axe de rotation D du balancier-spiral, forment ensemble un fil « de torsion », mais dans lequel chaque lame est déformée plutôt en flexion-torsion. Un système de ce type est plus résistant aux chocs et donne la moindre rigidité à la torsion. La rigidité kfil du fil 5 est alors la rigidité résultante de ces fils élémentaires.

Ainsi, dans une variante particulière et avantageuse, la rigidité de torsion de l'ensemble de tous les fils de torsion 5 que comporte l'oscillateur 100 est au moins dix fois plus faible que la rigidité de torsion du plus faible des spiraux 3 que comporte l'oscillateur 100.

Dans une variante particulière, et notamment dans celle illustrée par les figures 1 et 2, chaque fil de torsion 5 est en silicium monocristallin, avec une section rectangulaire inférieure ou égale à 5 micromètres x 10 micromètres, et est soumis à une force de tension magnétique d'intensité supérieure ou égale à 7 m.N.

Dans une variante particulière, cette force de tension est limitée en valeur supérieure à 9 m.N, ce qui convient bien à des montres conçues pour un usage courant, et permet de ne pas surdimensionner inutilement les composants magnétiques, et, par conséquent, le mouvement tout entier.

Pour des applications très particulières, par exemple en aéronautique ou astronautique, et notamment pour un usage en fortes accélérations, chaque tel fil de torsion 5 est soumis à une force de tension magnétique d'intensité supérieure ou égale 15 mN. Avantageusement, et tel que visible sur les figures 1, 2, et 8, la masse mobile 6 comporte une partie conique 61 selon l'axe D, et en pointe du côté de la masse polaire 7 avec laquelle elle coopère. En effet, si les figures ne représentent qu'une seule masse mobile 6 et une seule masse polaire 7, il est possible de réaliser une succession axiale de plusieurs masses mobiles 6 et/ou de plusieurs masses polaires 7.

Dans une variante de construction, aucun couple parasite n'est généré sur l'axe D, mais où, soit le pôle 6, soit le pôle 7, n'est pas à symétrie axiale. C'est par exemple le cas si le au moins un pôle 6 ou 7 est décentré par rapport à l'axe D, et si le pôle 7 ou 6 est un anneau interagissant avec le au moins un pôle 6 ou 7. Il est toutefois difficile de mettre au point une construction où les deux sont asymétriques, sans génération d'un couple préjudiciable à la chronométrie. Aussi, plus particulièrement, au moins l'un des deux pôles possède une symétrie axiale de révolution.

Selon une caractéristique particulière, au repos, selon l'axe D, un jeu J d'une valeur de 5 à 40 micromètres s'étend entre la pointe de la partie conique 61 et une paroi d'extrémité faisant butée: une surface de la masse polaire 7, ou de préférence une entretoise amagnétique 75 sur les figures 1 et 2, ou un élément de la structure 4 sur la figure 8.

Plus particulièrement, la masse polaire 7 est logée dans un chaton 81, qui est suspendu par un amortisseur parachute 82 à un cabochon 8 logé dans un pont 43 que comporte la structure 4. Ce cabochon 8 comporte une cheminée 84 faisant butée radiale pour la masse mobile 6 en cas de choc.

L'invention concerne encore un mouvement 200 d'horlogerie, comportant au moins un tel oscillateur 100.

L'invention concerne encore une montre 300 comportant au moins un tel oscillateur 100.

En somme, l'invention concerne un oscillateur hybride combinant un ensemble balancier-spiral classique à un fil de torsion effectuant aussi un rappel du balancier :

- un fil de torsion est fixé à une seule extrémité, au lieu de deux dans l'art antérieur BLANCPAIN cité plus haut ;
- le spiral subsiste ; la rigidité totale dépend fortement de la rigidité du spiral, qui est entre 10 et 100 fois supérieure à la rigidité du fil sous une déformation de torsion ;
- au moins une masse magnétique (aimant ou composant ferromagnétique) est positionnée proche de l'extrémité libre du fil (celle à l'opposé de la fixation), cette masse magnétique étant, dans une réalisation particulière mais non limitative, fixée solidaire d'un ressort parachute monté sur la platine ou sur le pont de balancier ;
- une serge, un spiral (par l'intermédiaire d'une virole), et un petit plateau sont fixés sur le fil, qui présente une seule ou plusieurs portées ayant comme fonction le support de ces composants ;
- une masse magnétique (aimant ou composant ferromagnétique) ayant une symétrie au moins axiale et de préférence cylindrique, donc sous rotation, est positionnée fixée à l'extrémité libre du fil, qui présente une portée pour cette fonction. Cette masse est donc en face de l'autre masse magnétique fixée sur la platine ou le pont de balancier. Dans le cas où les deux masses sont des aimants, les deux aimants sont polarisés pour être en attraction dans une première variante, ou en répulsion dans une deuxième variante.

Des variantes sont envisageables :

- les deux masses magnétiques peuvent être aimant-aimant ou aimant-ferromagnétique ou ferromagnétique-aimant ;
- une troisième et une quatrième masses magnétiques peuvent être fixées, respectivement, sur le fil proche de l'encastrement mécanique et sur la platine ou le pont en face du fil à l'encastrement. Ces masses ont alors la fonction d'augmenter la stabilité radiale du fil ;
- le fil peut être perméable magnétiquement ou amagnétique ;
- le fil peut être constitué par plusieurs lames microstructurées pour en augmenter la résistance mécanique ;
- des butées latérales en proximité de l'extrémité mécaniquement libre du fil et de la serge peuvent être introduites pour assurer la tenue mécanique en cas de grand choc.

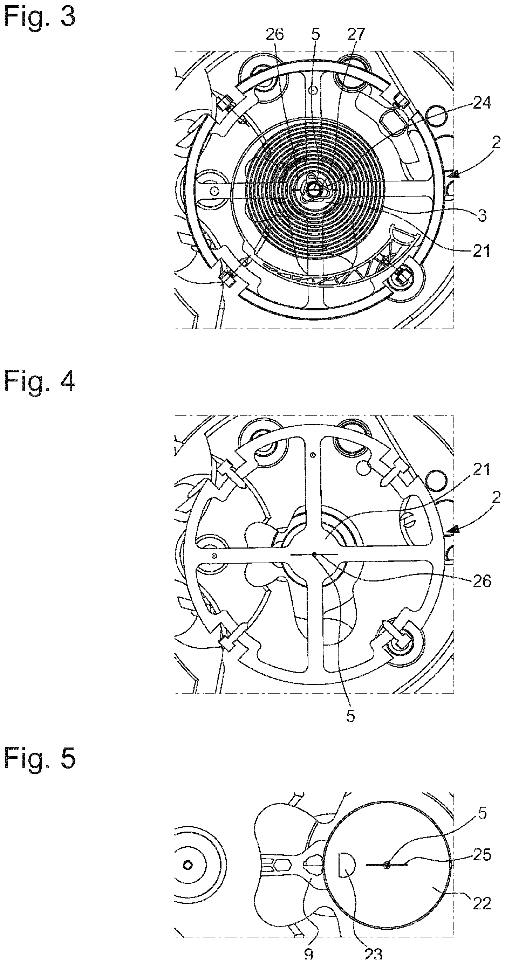

Les figures 1 et 2 illustrent la première variante en attraction magnétique. Le fil 5 est encastré dans la platine 41 de la structure 4 au niveau d'un ancrage 51. Un aimant 7 est fixé au parachute 82 du pont du balancier 43. Sur le fil 5, quatre portées 55, 56, 57, 58, formant des élargissements de la lame-fil ont la fonction de permettre la fixation, notamment par collage ou similaire, respectivement d'un plateau 22, d'une serge 21 de balancier 2, d'une virole 24 avec son spiral 3 et d'un composant ferromagnétique 6 de forme conique, ici en symétrie cylindrique. Le détail de ces fixations est visible aux figures 3 à 5. Le composant 8 qui porte l'aimant 7 du pont de balancier possède une cheminée 84 qui travaille comme butée latérale en cas de choc important.

La figure 8 illustre la deuxième variante en répulsion magnétique, la place de l'aimant 7 est décalée et rapprochée de la platine 41, la masse mobile 6 est logée au-delà de cet aimant 7.

Un fil en silicium monocristallin de longueur 2 mm, avec une section rectangulaire de 5 microns x 10 microns présente une rigidité de torsion 100 fois inférieure à la rigidité d'un spiral typique permettant une oscillation de 10 Hz (par exemple calibre 7400 de BREGUET), si couplé à un balancier ayant une inertie J = 2.5 mg cm$^2$.

Un fil ayant ces dimensions, fixé à une extrémité et soumis à une force de tension magnétique de 15 mN, et soumis à une torsion de 100°, présente des contraintes mécaniques de 400 MP, en dessous de la limite de rupture d'un facteur compris entre 2 et 3 (tout comme un spiral).

La variante dans laquelle une seule portée est utilisée pour la fixation des quatre composants au fil est la plus proche du système traditionnel. Chaque composant tourne du même angle pendant la torsion du fil.

La variante la plus avantageuse pour l'entretien du système est celle utilisant deux portées différentes, sur la première portée étant fixé l'ensemble spiral-serge-composant ferromagnétique (cette portée est proche de l'extrémité libre du fil), sur la deuxième portée (plus proche à l'encastrement du fil) étant fixé le petit plateau. Dans cette configuration, l'angle de rotation du petit plateau est inférieur à l'angle de rotation de l'ensemble spiral-serge-composant ferromagnétique, donc la vitesse de rotation maximale du petit plateau est inférieure à la vitesse de rotation d'un balancier traditionnel ayant mêmes fréquence et amplitude : cette nouvelle propriété permet d'entretenir plus efficacement le système parce que le mécanisme d'échappement peut plus facilement transférer l'énergie au petit plateau, et donc à l'oscillateur.

L'invention est décrite ici avec une sustentation magnétique. Elle peut naturellement aussi être mise en oeuvre avec une sustentation de type électrostatique, ou encore avec une combinaison magnétique-électrostatique.

L'invention apporte des avantages conséquents :

- absence de frottement de pivots lors de l'oscillation ;
- faible dépendance de la chronométrie en fonction de la position de la montre ;
- utilisation de techniques standard de réglage chronométrique, de compensation thermique et d'entretien ;
- aptitude au cas d'une montre-bracelet ;
- aptitude au cas d'un chronomètre de marine ;
- aptitude à une utilisation statique.


**Revendications**

1. Oscillateur (100) d'horlogerie, comportant au moins un ensemble balancier-spiral (10) comportant un mobile balancier (1) comportant lui-même au moins une serge de balancier (2) et rappelé par au moins un spiral (3), **caractérisé en ce que** ledit mobile balancier (1) est pivoté par rapport à une structure (4), d'un premier côté par au moins un fil de torsion (5) fixé par un ancrage (51) rigide ou au travers d'un pare-chute à ladite structure (4), et d'un deuxième côté opposé audit premier côté par un pivot magnétique sans contact, ledit mobile balancier (1) comportant au moins un premier pôle (60) embarqué avec ledit mobile balancier (1) et ledit au moins un fil de torsion (5), chaque dit au moins un premier pôle (60) ayant une symétrie par rapport à un plan passant par l'axe (D) dudit ensemble balancier-spiral (10 ledit au moins un premier pôle (60) coopérant avec au moins un deuxième pôle (70) que comporte ladite structure (4), pour la suspension magnétique d'au moins un dit premier pôle (60), et de façon à exercer sur l'extrémité distale dudit au moins un fil de torsion (5), opposée audit ancrage (51), dans un champ magnétique résultant à symétrie axiale, un effort magnétique de mise en tension axiale dudit au moins un fil de torsion (5), pour un maintien axial dudit fil de torsion (5), et un effort magnétique de centrage radial dudit mobile balancier (1).

2. Oscillateur (100) selon la revendication 1, **caractérisé en ce que** au moins un dit premier pôle (60) a une symétrie de révolution par rapport audit axe (D) dudit ensemble balancier-spiral (10).

3. Oscillateur (100) selon la revendication 1 ou 2, **caractérisé en ce que** au moins un dit premier pôle (60) coopère en attraction magnétique avec au moins un dit deuxième pôle (70).

4. Oscillateur (100) selon la revendication 3, **caractérisé en ce que** chaque dit premier pôle (60) coopère en attraction magnétique avec au moins un dit deuxième pôle (70).

5. Oscillateur (100) selon la revendication 1 ou 2, **caractérisé en ce que** au moins un dit premier pôle (60) coopère en répulsion magnétique avec au moins un dit deuxième pôle (70).

6. Oscillateur (100) selon la revendication 5, **caractérisé en ce que** chaque dit premier pôle (60) coopère en répulsion magnétique avec au moins un dit deuxième pôle (70).

7. Oscillateur (100) selon l'une des revendications 1 à 6, **caractérisé en ce qu'**un dit premier pôle (60) est une masse mobile (6) indépendante dudit mobile balancier (1).

8. Oscillateur (100) selon l'une des revendications 1 à 7, **caractérisé en ce qu'**un dit deuxième pôle (70) est une masse polaire (7) à symétrie de révolution autour dudit axe (D) et indépendante de toute source d'énergie externe.

9. Oscillateur (100) selon l'une des revendications 1 à 8, **caractérisé en ce que** ledit au moins un fil de torsion (5) est un faisceau (50) regroupant une pluralité de dits fils de torsion (5) régulièrement répartis autour dudit axe (D) et chacun supporté par un plan passant par ledit axe (D) ou par une hélice se développant autour dudit axe (D).

10. Oscillateur (100) selon l'une des revendications 1 à 8, **caractérisé en ce que** ledit au moins un fil de torsion (5) est un fil de torsion unique (5) s'étendant au moins le long dudit axe (D).

11. Oscillateur (100) selon l'une des revendications 1 à 10, **caractérisé en ce que** ledit au moins un fil de torsion (5) comporte une partie longiligne s'étendant sensiblement selon la direction dudit axe (D), et au moins une portée d'extension radiale (55, 56, 57, 58) pour sa fixation à un plateau (22) que comporte ledit mobile balancier (1), et/ou à une partie axiale (21) que comporte ladite serge de balancier (2), et/ou à une virole (24) que comporte ledit mobile balancier (1) pour la fixation d'un dit spiral (3), et/ou à ladite masse mobile (6).

12. Oscillateur (100) selon la revendication 11, **caractérisé en ce que** chaque dite portée (55, 56, 57, 58) est sensiblement plate, et est agencée pour son insertion dans une fente (25, 26, 27, 28) que comporte ladite serge de balancier (2), et/ou à une virole (24) que comporte ledit mobile balancier (1) pour la fixation d'un dit spiral (3), et/ou à ladite masse mobile (6).

13. Oscillateur (100) selon la revendication 11 ou 12, **caractérisé en ce que** ledit au moins un fil de torsion (5) est un fil de torsion unique (5) s'étendant au moins le long dudit axe (D), et comportant une portée radiale unique regroupant toutes les lesdites portées (55, 56, 57, 58).

14. Oscillateur (100) selon la revendication 11 ou 12, **caractérisé en ce que** ledit au moins un fil de torsion (5) est un fil de torsion unique (5) s'étendant au moins le long dudit axe (D), et comportant une première paire de portées, parmi les dite portées d'extension radiale (55, 56, 57, 58), regroupant deux dites portées (55, 56) pour sa fixation audit plateau (22) et à ladite partie axiale (21) de ladite serge de balancier (2), et une deuxième paire de portées regroupant deux dites portées (57, 58) pour sa fixation à ladite virole (24) et à ladite masse mobile (6).

15. Oscillateur (100) selon la revendication 11 ou 12, **caractérisé en ce que** ledit au moins un fil de torsion (5) est un fil de torsion unique (5) s'étendant au moins le long dudit axe (D), et comportant une première portée unique parmi les dites portées d'extension radiale (55, 56, 57, 58), et une paire de portées ou une triplette de portées parmi les autres dites portées d'extension radiale (55, 56, 57, 58) différentes de ladite première portée.

16. Oscillateur (100) selon la revendication 11 ou 12, **caractérisé en ce que** ledit au moins un fil de torsion (5) est un fil de torsion unique (5) s'étendant au moins le long dudit axe (D), et comportant une première paire de portées parmi les dites portées d'extension radiale (55, 56, 57, 58), et deux portées distinctes parmi les autres dites portées d'extension radiale (55, 56, 57, 58) différentes de ladite première paire de portées.

17. Oscillateur (100) selon l'une des revendications 1 à 16, **caractérisé en ce que** ledit au moins un fil de torsion (5) comporte un ancrage d'extrémité (51) pour sa fixation encastrée dans une platine (41) que comporte ladite structure (4), et s'étend sensiblement perpendiculairement en porte-à-faux par rapport à ladite platine (41).

18. Oscillateur (100) selon l'une des revendications 1 à 17, **caractérisé en ce que** la rigidité de torsion de l'ensemble de tous lesdits fils de torsion (5) que comporte ledit oscillateur (100) est au moins dix fois plus faible que la rigidité de torsion du plus faible desdits spiraux (3) que comporte ledit oscillateur (100).

19. Oscillateur (100) selon l'une des revendications 1 à 18, **caractérisé en ce que** chaque dit fil de torsion (5) est en silicium monocristallin avec une section rectangulaire inférieure ou égale à 5 micromètres x 10 micromètres, et est soumis à une force de tension magnétique d'intensité supérieure ou égale à 7 mN.

20. Oscillateur (100) selon l'une des revendications 1 à 19, **caractérisé en ce que** ladite masse mobile (6) comporte une partie conique (61) selon ledit axe (D) et en pointe du côté de ladite masse polaire (7).

21. Oscillateur (100) selon l'une des revendications 1 à 20, **caractérisé en ce que**, au repos, selon ledit axe (D), un jeu (J) d'une valeur de 5 à 40 micromètres s'étend entre la pointe de ladite partie conique (61) et ladite masse polaire (7).

22. Oscillateur (100) selon l'une des revendications 1 à 21, **caractérisé en ce que** ladite masse polaire (7) est logée dans un chaton (81) suspendu par un amortisseur parachute (82) à un cabochon (8) logé dans un pont (43) que comporte ladite structure (4), lequel cabochon (8) comporte une cheminée (84) faisant butée radiale pour ladite masse mobile (6) en cas de choc.

23. Mouvement (200) d'horlogerie, comportant au moins un dit oscillateur (100) selon une des revendications 1 à 22

24. Montre (300) comportant au moins un dit oscillateur (100) selon une des revendications 1 à 22.

**Patentansprüche**

1. Uhrenoszillator (100), umfassend mindestens eine Unruh-Spiralfederanordnung (10), die ein Unruhdrehteil (1) umfasst, das seinerseits mindestens einen Unruhreif (2) aufweist und durch mindestens eine Spiralfeder (3) zurückgestellt wird, **dadurch gekennzeichnet, dass** das Unruhdrehteil (1) in Bezug auf einen Aufbau (4) auf einer ersten Seite durch mindestens einen Torsionsdraht (5), der durch eine starre Verankerung (51) oder über einen Parachute an dem Aufbau (4) befestigt ist, und auf einer zweiten Seite gegenüber der ersten Seite durch einen kontaktlosen magnetischen Drehzapfen gedreht wird, wobei das Unruhdrehteil (1) mindestens einen ersten Pol (60) umfasst, eingebettet in das Unruhdrehteil (1) und in den mindestens einen Torsionsdraht (5), wobei jeder mindestens eine erste Pol (60) eine Symmetrie in Bezug auf eine Ebene aufweist, die durch die Achse (D) der Unruh-Spiralfederanordnung (10) verläuft, wobei der mindestens eine erste Pol (60) mit mindestens einem zweiten Pol (70) zusammenwirkt, den der Aufbau (4) aufweist, um den mindestens einen ersten Pol (60) magnetisch aufzuhängen, derart, dass auf das entfernte Ende des mindestens einen Torsionsdrahts (5) gegenüber der Verankerung (51) in einem resultierenden Magnetfeld mit axialer Symmetrie eine magnetische Kraft, die den mindestens einen Torsionsdraht (5) axial spannt, um den Torsionsdraht (5) axial zu halten, und eine radiale magnetische Zentrierungskraft für das Unruhdrehteil (1) ausgeübt werden.

2. Oszillator (100) nach Anspruch 1, **dadurch gekennzeichnet, dass** mindestens ein erster Pol (60) eine Rotationssymmetrie in Bezug auf die Achse (D) der Unruh-Spiralfederanordnung (10) besitzt.

3. Oszillator (100) nach Anspruch 1 oder 2, **dadurch gekennzeichnet, dass** mindestens ein erster Pol (60) magnetisch anziehend mit mindestens einem zweiten Pol (70) zusammenwirkt.

4. Oszillator (100) nach Anspruch 3, **dadurch gekennzeichnet, dass** jeder erste Pol (60) magnetisch anziehend mit mindestens einem zweiten Pol (70) zusammenwirkt.

5. Oszillator (100) nach Anspruch 1 oder 2, **dadurch gekennzeichnet, dass** mindestens ein erster Pol (60) magnetisch abstoßend mit mindestens einem zweiten Pol (70) zusammenwirkt.

6. Oszillator (100) nach Anspruch 5, **dadurch gekennzeichnet, dass** jeder erste Pol (60) magnetisch abstoßend mit mindestens einem zweiten Pol (70) zusammenwirkt.

7. Oszillator (100) nach einem der Ansprüche 1 bis 6, **dadurch gekennzeichnet, dass** ein erster Pol (60) eine bewegliche Masse (6) ist, die von dem Unruhdrehteil (1) unabhängig ist.

8. Oszillator (100) nach einem der Ansprüche 1 bis 7, **dadurch gekennzeichnet, dass** ein zweiter Pol (70) eine polare Masse (7) mit Rotationssymmetrie um die Achse (D) ist und von jeder externen Energiequelle unabhängig ist.

9. Oszillator (100) nach einem der Ansprüche 1 bis 8, **dadurch gekennzeichnet, dass** der mindestens eine Torsionsdraht (5) ein Bündel (50) ist, das mehrere Torsionsdrähte (5) umfasst, die um die Achse (D) gleichmäßig verteilt sind und von denen jeder in Bezug auf eine Ebene, die durch die Achse (D) verläuft, oder in Bezug auf eine Schraubenlinie, die um die Achse (D) verläuft, gehalten wird.

10. Oszillator (100) nach einem der Ansprüche 1 bis 8, **dadurch gekennzeichnet, dass** der mindestens eine Torsionsdraht (5) ein einzelner Torsionsdraht (5) ist, der sich mindestens längs der Achse (D) erstreckt.

11. Oszillator (100) nach einem der Ansprüche 1 bis 10, **dadurch gekennzeichnet, dass** der mindestens eine Torsionsdraht (5) einen langgliedrigen Teil, der sich im Wesentlichen in Richtung der Achse (D) erstreckt, und mindestens einen radialen Erweiterungsbereich (55, 56, 57, 58) umfasst für seine Befestigung an einer Platte (22), die das Unruhdrehteil (1) aufweist, und/oder an einem axialen Teil (21), den der Unruhreif (2) aufweist, und/oder an einer Spiralrolle (24), die das Unruhdrehteil (1) für die Befestigung einer Spiralfeder (3) aufweist, und/oder an der beweglichen Masse (6).

12. Oszillator (100) nach Anspruch 11, **dadurch gekennzeichnet, dass** jeder Bereich (55, 56, 57, 58) im Wesentlichen eben ist und dafür ausgelegt ist, in einen Schlitz (25, 26, 27, 28), den der Unruhreif (2) aufweist, und/oder in eine Spiralrolle (24), die das Unruhdrehteil (1) für die Befestigung einer Spiralfeder (3) aufweist, und/oder in die bewegliche Masse (6) eingesetzt zu werden.

13. Oszillator (100) nach Anspruch 11 oder 12, **dadurch gekennzeichnet, dass** der mindestens eine Torsionsdraht (5) ein einzelner Torsionsdraht (5) ist, der sich mindestens längs der Achse (D) erstreckt und einen einzelnen radialen Bereich aufweist, der sämtliche Bereiche (55, 56, 57, 58) umfasst.

14. Oszillator (100) nach Anspruch 11 oder 12, **dadurch gekennzeichnet, dass** der mindestens eine Torsionsdraht (5) ein einzelner Torsionsdraht (5) ist, der sich mindestens längs der Achse (D) erstreckt und ein erstes Bereichepaar unter den radialen Erweiterungsbereichen (55, 56, 57, 58) aufweist, das zwei Bereiche (55, 56) für seine Befestigung an der Platte (22) und an dem axialen Teil (21) des Unruhreifs (2) umfasst, und ein zweites Bereichepaar aufweist, das zwei Bereiche (57, 58) für seine Befestigung an der Spiralrolle (24) und an der beweglichen Masse (6) umfasst.

15. Oszillator (100) nach Anspruch 11 oder 12, **dadurch gekennzeichnet, dass** der mindestens eine Torsionsdraht (5) ein einzelner Torsionsdraht (5) ist, der sich mindestens längs der Achse (D) erstreckt und einen ersten einzelnen Bereich unter den radialen Erweiterungsbereichen (55, 56, 57, 58) und ein Bereichepaar oder ein Tripel von Bereichen unter den anderen radialen Erweiterungsbereichen (55, 56, 57, 58), die von dem ersten Bereich verschieden sind, umfasst.

16. Oszillator (100) nach Anspruch 11 oder 12, **dadurch gekennzeichnet, dass** der mindestens eine Torsionsdraht (5) ein einzelner Torsionsdraht (5) ist, der sich mindestens längs der Achse (D) erstreckt und ein erstes Bereichepaar unter den radialen Erweiterungsbereichen (55, 56, 57, 58) und zwei verschiedene Bereiche unter den anderen radialen Erweiterungsbereichen (55, 56, 57, 58), die von dem ersten Bereichepaar verschieden sind, umfasst.

17. Oszillator (100) nach einem der Ansprüche 1 bis 16, **dadurch gekennzeichnet, dass** der mindestens eine Torsionsdraht (5) eine Stirnverankerung (51) für seine Befestigung umfasst, die in eine Platine (41) eingebaut ist, die der Aufbau (4) aufweist, und sich im Wesentlich senkrecht vorspringend in Bezug auf die Platine (41) erstreckt.

18. Oszillator (100) nach einem der Ansprüche 1 bis 17, **dadurch gekennzeichnet, dass** die Torsionssteifigkeit der Anordnung aller Torsionsdrähte (5), die der Oszillator (100) aufweist, mindestens zehnmal geringer ist als die Torsionssteifigkeit der schwächsten der Spiralfedern (3), die der Oszillator (100) aufweist.

19. Oszillator (100) nach einem der Ansprüche 1 bis 18, **dadurch gekennzeichnet, dass** jeder Torsionsdraht (5) aus monokristallinem Silicium hergestellt ist, und zwar mit einem rechtwinkligen Querschnitt, der kleiner oder gleich 5 Mikrometer x 10 Mikrometer ist, und einer magnetischen Zugkraft mit einer Stärke größer oder gleich 7 mN unterliegt.

20. Oszillator (100) nach einem der Ansprüche 1 bis 19, **dadurch gekennzeichnet, dass** die bewegliche Masse (6) einen konischen Teil (61) längs der Achse (D) mit einer Spitze auf Seiten der polaren Masse (7) aufweist.

21. Oszillator (100) nach einem der Ansprüche 1 bis 20, **dadurch gekennzeichnet, dass** im Ruhezustand längs der Achse (D) ein Spiel (J) mit einem Wert im Bereich von 5 bis 40 Mikrometern zwischen der Spitze des konischen Teils (61) und der polaren Masse (7) vorhanden ist.

22. Oszillator (100) nach einem der Ansprüche 1 bis 21, **dadurch gekennzeichnet, dass** sich die polare Masse (7) in einem Futter (81) befindet, das durch einen Parachute-Dämpfer (82) an einem Cabochon (8), der in einer Brücke (43) aufgenommen ist, die der Aufbau (4) aufweist, aufgesattelt ist, wobei der Cabochon (8) einen Schlot (84) aufweist, der für die bewegliche Masse (6) im Falle eines Stoßes einen radialen Anschlag bildet.

23. Uhrwerk (200), umfassend mindestens einen Oszillator (100) nach einem der Ansprüche 1 bis 22.

24. Uhr (300), umfassend mindestens einen Oszillator (100) nach einem der Ansprüche 1 bis 22.

**Claims**

1. Timepiece oscillator (100), comprising at least one sprung balance assembly (10) including a balance wheel set (1), itself including at least one balance rim (2) and returned by at least one balance spring (3), **characterized in that** said balance wheel set (1) is pivoted with respect to a structure (4), on a first side by at least one torsion wire (5), fixed by a stiff anchoring element (51) or by means of a parachute spring to said structure (4), and on a second side, opposite to said first side, by a contactless magnetic pivot, said balance wheel set (1) comprising at least a first pole (60) embedded with said balance wheel set (1) and said at least one torsion wire (5), each said at least one first pole (60) having a symmetry with respect to a plane passing through the axis (D) of said sprung balance assembly (10), said at least one first pole (60) cooperating with at least one second pole (70) comprised in said structure (4), for the magnetic suspension of at least one said first pole (60), and to exert on the distal end of said at least one torsion wire (5), opposite to said anchoring element (61), in a resultant magnetic field with axial symmetry, a magnetic force for axially tensioning said at least one torsion wire (5), for the axial holding of said torsion wire (5), and a magnetic force for radially centring said balance wheel set (1).

2. Oscillator (100) according to claim 1, **characterized in that** at least one said first pole (60) has a symmetry of revolution with respect to said axis (D) of said sprung balance assembly (10).

3. Oscillator (100) according to claim 1 or 2, **characterized in that** at least one said first pole (60) cooperates by means of magnetic attraction with at least one said second pole (70).

4. Oscillator (100) according to claim 3, **characterized in that** each said first pole (60) cooperates by means of magnetic attraction with at least one said second pole (70).

5. Oscillator (100) according to claim 1 or 2, **characterized in that** at least one said first pole (60) cooperates by means of magnetic repulsion with at least one said second pole (70).

6. Oscillator (100) according to claim 5, **characterized in that** each said first pole (60) cooperates by means of magnetic repulsion with at least one said second pole (70).

7. Oscillator (100) according to any of claims 1 to 6, **characterized in that** one said first pole (60) is a movable weight (6) independent of said balance wheel set (1).

8. Oscillator (100) according to any of claims 1 to 7, **characterized in that** one said second pole (70) is a pole piece (7) with symmetry of revolution about said axis (D) and independent of any external energy source.

9. Oscillator (100) according to any of claims 1 to 8, **characterized in that** said at least one torsion wire (5) is a bundle (50) grouping together a plurality of said torsion wires (5) regularly distributed around said axis (D) and each supported on a plane passing through said axis (D) or on an helix developing around said axis (D).

10. Oscillator (100) according to any of claims 1 to 8, **characterized in that** said at least one torsion wire (5) is a single torsion wire (5) extending at least along said axis (D).

11. Oscillator (100) according to any of claims 1 to 10, **characterized in that** said at least one torsion wire (5) includes a slender portion extending substantially in the direction of said axis (D), and at least one radial extension shoulder (55, 56, 57, 58) for the attachment thereof to a roller (22) comprised in said balance wheel set (1), and/or an axial portion (21) comprised in said balance rim (2), and/or to a collet (24) comprised in said balance wheel set (1) for the attachment of a said balance spring (3), and/or to said movable weight (6).

12. Oscillator (100) according to claim 11, **characterized in that** each said shoulder (55, 56, 57, 58) is substantially flat, and is arranged for insertion into a slot (25, 26, 27) comprised in said balance rim (2), and/or into a collet (24) comprised in said balance wheel set (1) for the attachment of a said balance spring (3), and/or into said movable weight (6).

13. Oscillator (100) according to claim 11 or 12, **characterized in that** said at least one torsion wire (5) is a single torsion wire (5) extending at least along said axis (D), and comprising a single radial shoulder grouping together all of said shoulders (55, 56, 57, 58).

14. Oscillator (100) according to claim 11 or 12, **characterized in that** said at least one torsion wire (5) is a single torsion wire (5) extending at least along said axis (D), and comprising a first pair of shoulders, among said radial extension shoulders (55, 56, 57, 58), grouping together two said shoulders (55, 56), for the attachment thereof to said roller (22) and to said axial portion (21) of said balance rim (2), and a second pair of shoulders grouping together two said shoulders (57, 58), for the attachment thereof to said collet (24) and to said movable weight (6).

15. Oscillator (100) according to claim 11 or 12, **characterized in that** said at least one torsion wire (5) is a single torsion wire (5) extending at least along said axis (D), and comprising a single first shoulder among said radial extension shoulders (55, 56, 57, 58), and a pair of shoulders or a triplet of shoulders from among the other said radial extension shoulders (55, 56, 57, 58) that are different from said first shoulder.

16. Oscillator (100) according to claim 11 or 12, **characterized in that** said at least one torsion wire (5) is a single torsion wire (5) extending at least along said axis (D), and comprising a first pair of shoulders among said radial extension shoulders (55, 56, 57, 58), and two separate shoulders from among the other said radial extension shoulders (55, 56, 57, 58) that are different from said first pair of shoulders.

17. Oscillator (100) according to any of claims 1 to 16, **characterized in that** said at least one torsion wire (5) comprises an end anchoring element (51) for the setting thereof in a main plate (41) comprised in said structure (4), and extends substantially perpendicularly and overhanging with respect to said plate (41).

18. Oscillator (100) according to any of claims 1 to 17, **characterized in that** the torsional stiffness of the set of all said torsion wires (5) comprised in said oscillator (100) is at least ten times lower than the torsional stiffness of the least stiff said balance spring (3) comprised in said oscillator (100).

19. Oscillator (100) according to any of claims 1 to 18, **characterized in that** each said torsion wire (5) is made of single crystal silicon, with a rectangular cross-section less than or equal to 5 micrometres x 10 micrometres, and is subjected to a magnetic tension force of intensity greater than or equal to 7 mN.

20. Oscillator (100) according to any of claims 1 to 19, **characterized in that** said movable weight (6) comprises a portion (61) that is conical along said axis (D) and pointed on the side of said pole piece (7).

21. Oscillator (100) according to any of claims 1 to 20, **characterized in that**, at rest, along said axis (D), a play (J) with a value of 5 to 40 micrometres extends between the tip of said conical portion (61) and said pole piece (7).

22. Oscillator (100) according to any of claims 1 to 21, **characterized in that** said pole piece (7) is housed inside a setting (81) suspended by a parachute spring (82) to a cabochon (8) housed inside a bridge (43) comprised in said structure (4), said cabochon (8) includes a pipe (84) forming a radial stop for said movable weight (6) in the event of a shock.

23. Timepiece movement (200) including at least one said oscillator (100) according to any of claims 1 to 22.

24. Watch (300) including at least one said oscillator (100) according to any of claims 1 to 22.

EP 3 273 309 B1

Fig. 1

Fig. 2

13

Fig. 3

Fig. 4

Fig. 5

Fig. 8

Fig. 6

Fig. 7

Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2703911 A

- CH 0157112